# EUROPÄISCHE PATENTSCHRIFT

(11) **EP 4 634 543 B1**
(45) Veröffentlichungstag und Bekanntmachung des Hinweises auf die Patenterteilung: **09.12.2026**
(21) Anmeldenummer: 23798098.2
(22) Anmeldetag: 17.10.2023
(51) Int. Cl.: F16D 48/02

(54) **NEHMERVORRICHTUNG FÜR EIN HYBRIDES ODER ELEKTRISCHES FAHRZEUG**
SLAVE DEVICE FOR A HYBRID OR ELECTRIC VEHICLE
DISPOSITIF ASSERVI POUR VÉHICULE HYBRIDE OU ÉLECTRIQUE

(30) Priorität: 15.12.2022 DE 102022133459
(43) Veröffentlichungstag der Anmeldung: 22.10.2025
(73) Patentinhaber: Schaeffler Technologies AG & Co. KG, 91074 Herzogenaurach (DE)
(72) Erfinder: PROKHOROV, Kirill, 77855 Achern (DE)
(74) Vertreter: Schaeffler Technologies
(86) Internationale Anmeldenummer: PCT/DE2023/100773
(87) Internationale Veröffentlichungsnummer: WO 2024/125686

(56) Entgegenhaltungen:
- WO-A1-2021/170173
- DE-A1- 102019 106 335
- DE-A1- 102019 113 654
- US-A1- 20230 084 446

## Beschreibung

Die Erfindung betrifft eine Nehmervorrichtung, beispielsweise einen Zentralausrücker, für ein hybrides oder elektrisches Fahrzeug sowie eine Antriebsanordnung für ein hybrides oder elektrisches Fahrzeug.

Nehmervorrichtungen, wie Zentralausrücker, werden z. B. in Hybrid-Antrieben zum Trennen eines Elektromotors von und zum Verbinden eines Elektromotors mit einem Verbrennungsmotor eingesetzt. Deshalb hat die einwandfreie Funktionalität einer Nehmervorrichtung in einem Getriebe, wie z. B. in einem Hybridgetriebe, eine hohe Bedeutung bezüglich ihrer funktionalen Sicherheit.

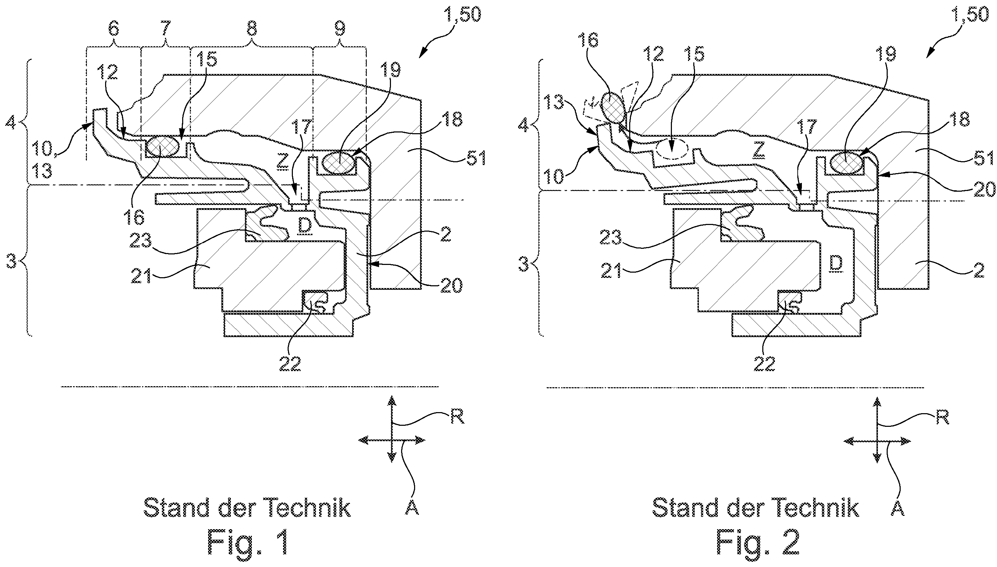

Aus dem Stand der Technik ist eine Nehmervorrichtung 1, wie in den Figuren 1 und 2 gezeigt, bekannt. Konkret ist ein Zentralausrücker (CSC) gezeigt, welcher ein Gehäuseelement 2, ein Kolbenelement 21, Nutdichtringe 22, 23 und O-Ringe 16, 19 umfasst. Dabei zeigt Figur 1 das Kolbenelement 21 im eingefahrenen Zustand, hingegen Figur 2 im ausgefahrenen Zustand.

Wie üblich, ist durch den Druckaufbau in einer Druckkammer D und in einer Zulaufkammer Z das Kolbenelement 21 in axialer Richtung A relativ zum Gehäuseelement 2 bewegbar, wodurch eine Kupplungseinrichtung (nicht dargestellt) einer Antriebsanordnung betätigt werden kann. Im vorliegenden Fall wird die Kupplungseinrichtung beim Ausrücken des Kolbenelements 21 geschlossen (ausgefahrener Zustand des Kolbenelements 21). Sobald die Kupplungseinrichtung geschlossen ist, kann volles Drehmoment übertragen werden.

Während des Druckabbaus bewegt sich das Kolbenelement 21 zurück in die Ausgangsstellung und die Kupplungseinrichtung (nicht dargestellt) wird geöffnet. Somit ist kein Übertragen eines Drehmoments möglich. Dabei drückt eine Tellerfeder (nicht dargestellt) das Kolbenelement 21 zurück in den eingefahrenen Zustand.

Im ausgefahrenen Zustand (Kolbenelement ausgerückt / Druck aufgebaut - vgl. Figur 2) und z. B. zusätzlich bei hoher Drehzahl kann eine Schiefstellung der Nehmervorrichtung 1 zu erhöhten Dynamiken und somit zu hohen Druckpulsationen in der Druckkammer D führen.

Diese Druckpulsationen haben eine erhöhte Belastung auf das Gehäuseelement 2 zur Folge und verformen das Gehäuseelement 2 radial nach innen (siehe Figur 2).

Dadurch erhöht sich der Spalt bzw. der Abstand zwischen Gehäuseelement 2 und einem Gehäuse 51 einer Antriebsanordnung, an welchem die Nehmervorrichtung 1 angeordnet ist. Dies führt dazu, dass der O-Ring 16 herausgedrückt wird. Es kommt zur Beschädigung des O-Rings 16 und zu einer Leckage. In der Konsequenz ist die Nehmervorrichtung 1 nicht mehr funktionsfähig. Aus der WO 2021/170173 A1 ist eine Nehmervorrichtung nach dem Oberbegriff des Anspruchs 1 bekannt. Weiterer Stand der Technik ist in der DE 102019 113 654 A1 sowie der DE 10 2019 106 335 A1 offenbart.

Vor diesem Hintergrund ist es Aufgabe der vorliegenden Erfindung, eine Nehmervorrichtung für ein hybrides oder elektrisches Fahrzeug sowie eine Antriebsanordnung für ein hybrides oder elektrisches Fahrzeug anzugeben, welche kostengünstig herstellbar ist und welche oben aufgezeigte Problemstellung löst bzw. eine Verformung des Gehäuseelements der Nehmervorrichtung bei erhöhten Druckbelastungen verhindert.

Diese Aufgabe wird durch die Merkmale der unabhängigen Patentansprüche gelöst. Weitere vorteilhafte Weiterbildungen sind Gegenstand der Unteransprüche.

Bei einem ersten Aspekt der vorliegenden Erfindung umfasst eine Nehmervorrichtung, wie z. B. ein Zentralausrücker, für ein hybrides oder elektrisches Fahrzeug ein Gehäuseelement mit einem ersten und einem zweiten Gehäuseteil, die in radialer Richtung zueinander versetzt angeordnet sind. Dabei kann der erste Gehäuseteil im Vergleich zum zweiten in radialer Richtung weiter innen angeordnet sein. Ferner kann das Gehäuseelement einteilig und/oder aus einem Kunststoff ausgebildet sein, wodurch dieses z. B. in einem Spritzgussverfahren herstellbar ist.

Ferner bildet der erste Gehäuseteil einen Teil einer Druckkammer, wobei im Zusammenspiel von dem ersten Gehäuseteil und einem Kolbenelement der Nehmervorrichtung eine vollständige Druckkammer ausbildbar ist. Somit ist ein Kolbenelement in axialer Richtung aufgrund eines druckbeaufschlagten Fluids in der Druckkammer relativ zum Gehäuseelement verfahrbar.

Zudem bildet der zweite Gehäuseteil einen Teil einer Zulaufkammer, wobei im Zusammenspiel von dem zweiten Gehäuseteil und einem Gehäuse einer Antriebsanordnung, als weiterer Teil der Zulaufkammer, eine vollständige Zulaufkammer ausbildbar ist. Die Zulaufkammer und die Druckkammer können in Fluidkommunikation miteinander verbunden sein, sodass ein Druckauf- oder -abbau in der Zulaufkammer einen Druckauf- oder -abbau in der Druckkammer bewirkt.

Dabei umfasst der zweite Gehäuseteil in axialer Richtung einen ersten Gehäuseabschnitt, der ein erstes axiales Ende der Nehmervorrichtung bildet.

Des Weiteren bildet der erste Gehäuseabschnitt eine Aufnahme für ein Gehäuse einer Antriebsanordnung, wobei die Aufnahme ein Gehäuse einer Antriebsanordnung derart umgreift, dass wenigstens ein Teilbereich der Aufnahme bei einer radial nach innen gerichteten Verformung des Gehäuseelements an einem Gehäuse einer Antriebsanordnung anschlägt, um die Verformung des zweiten Gehäuseteils zu begrenzen.

Außerdem kann der erste Gehäuseabschnitt oder der zweite Gehäuseteil einen radialen Anschlag aufweisen, mit welchem eine in radialer Richtung nach innen gerichtete Verformung des Gehäuseelements ab einem bestimmten Verformungsmaß des zweiten Gehäuseteils begrenzbar ist.

Dabei kann der radiale Anschlag Teil der Aufnahme sein oder von der Aufnahme gebildet werden. Mit anderen Worten ausgedrückt, kann der radiale Anschlag dem wenigstens einen Teilbereich der Aufnahme entsprechen.

Eine in radialer Richtung nach innen gerichtete Verformung des Gehäuseelements kann z. B. dadurch hervorgerufen werden, dass im Falle eines ausgerückten Kolbenelements der Nehmervorrichtung ein erhöhtes Druckniveau in der Druck- und Zulaufkammer herrscht. Zusätzlich kann auch z. B. eine Schiefstellung einer Kupplungseinrichtung während eines dynamischen Anwendungsfalles zu hohen Druckpulsationen führen. Beide Szenarien können zu erhöhten Belastungen auf das Gehäuseelement führen und das Gehäuseelement radial nach innen verformen, wodurch sich ein Spalt zwischen Gehäuseelement und einem Gehäuse einer Antriebsanordnung vergrößert. Eine Vergrößerung des Spalts kann beispielsweise dazu führen, dass ein Dichtung ihre vorgegebene Position verlässt und somit ihre Aufgabe nicht mehr korrekt erfüllt.

Eben dieser in radialer Richtung nach innen gerichteten Verformung kann mithilfe der Ausbildung einer Aufnahme für ein Gehäuse einer Antriebsanordnung entgegengewirkt werden. Denn die Aufnahme umgreift ein Gehäuse einer Antriebsanordnung derart, dass die beschriebene Verformung des Gehäuseelements mithilfe der umgreifenden Ausgestaltung zu einem Anschlagen an einem Gehäuse einer Antriebsanordnung führt, wodurch die Verformung des zweiten Gehäuseteils begrenzbar ist.

Ferner kann die Aufnahme geometrisch komplementär an ein Gehäuse einer Antriebsanordnung angepasst sein. Somit kann das Anschlagverhalten verbessert werden.

Des Weiteren kann die Aufnahme kreisrund ausgebildet sein und im axialen Querschnitt, z. B. entlang der axialen Richtung, eine Form ähnlich einer Dachrinne aufweisen. Auf diese Weise kann ein Umgreifen eines Gehäuse einer Antriebsanordnung leicht realisiert werden.

Auch kann vorgesehen sein, dass die Aufnahme im axialen Querschnitt, z. B. entlang der axialen Richtung, U-förmig oder halbkreisförmig ausgebildet ist, sodass ein Abschnitt oder ein Anschlagbereich eines Gehäuses einer Antriebsanordnung aufnehmbar ist.

Zudem weist die Aufnahme einen ersten, einen zweiten und einen dritten Schenkel auf, die miteinander verbunden sind, um z. B. einen U-förmigen Querschnitt zu bilden.

Ferner sind der erste und dritte Schenkel gleichorientiert zueinander ausgerichtet und der zweite Schenkel verbindet den ersten mit dem dritten. Der erste und/oder der dritte Schenkel können in axialer Richtung ausgerichtet oder orientiert sein.

Der dritte Schenkel kann im Vergleich zum ersten radial weiter außen ausgebildet sein.

Auch bildet der dritte Schenkel der Aufnahme den radialen Anschlag, der eine Verformung der Nehmervorrichtung in radialer Richtung nach innen begrenzt.

Zudem ist denkbar, dass der zweite Schenkel der Aufnahme einen axialen Anschlag bildet. Der zweite Schenkel kann in radialer Richtung ausgerichtet sein.

Des Weiteren kann der zweite Gehäuseteil einen zweiten Gehäuseabschnitt umfassen.

Dabei kann sich in axialer Richtung der zweite Gehäuseabschnitt an einen ersten Gehäuseabschnitt des zweiten Gehäuseteils anschließen. Somit setzt der zweite Gehäuseteil den ersten fort.

Ferner kann der zweite Gehäuseabschnitt eine Aufnahme für eine Dichtung aufweisen, um eine Zulaufkammer in axialer und radialer Richtung zu dichten. Die Aufnahme kann als Nut ausgebildet sein, um eine Dichtung aufzunehmen.

Des Weiteren kann vorgesehen sein, dass der zweite Gehäuseteil einen dritten Gehäuseabschnitt umfasst.

Dabei kann sich der dritte Gehäuseabschnitt an einen zweiten Gehäuseabschnitt des zweiten Gehäuseteils in axialer Richtung anschließen. Somit setzt der dritte Gehäuseteil den zweiten fort.

Der dritte Gehäuseabschnitt kann im Zusammenspiel mit einem Gehäuse einer Antriebsanordnung eine Zulaufkammer bilden.

Die Zulaufkammer kann von einem zweiten und einem vierten Gehäuseabschnitt des zweiten Gehäuseteils begrenzt und gedichtet werden.

Zudem kann der dritte Gehäuseabschnitt einen Ringspalt aufweisen, welcher eine Fluidkommunikation zwischen einer Zulaufkammer und einer Druckkammer herstellt. Auf diese Weise kann ein Fluid von der Druckkammer in die Zulaufkammer und umgekehrt strömen.

Der Ringspalt kann einen Übergang von einer Druckkammer in eine Zulaufkammer bilden, sodass ein druckbeaufschlagtes Fluid aus der Zulaufkammer in die Druckkammer zu- oder aus der Druckkammer in die Zulaufkammer ablaufen kann, um ein Kolbenelement der Nehmervorrichtung zu verfahren.

Des Weiteren kann der zweite Gehäuseteil einen vierten Gehäuseabschnitt umfassen.

Dabei kann sich der vierte Gehäuseabschnitt an einen dritten Gehäuseabschnitt des zweiten Gehäuseteils in axialer Richtung anschließen. Somit setzt der vierte Gehäuseteil den dritten fort.

Ferner kann der vierte Gehäuseabschnitt eine Aufnahme für eine Dichtung aufweisen, um eine Zulaufkammer in axialer und radialer Richtung zu dichten. Die Aufnahme kann als Nut ausgebildet sein, um eine Dichtung aufzunehmen.

Zudem kann der vierte Gehäuseabschnitt ein zweites axiales Ende der Nehmervorrichtung bilden.

Der erste und/oder zweite und/oder dritte und/oder vierte Gehäuseabschnitt des zweiten Gehäuseteils sind in axialer Richtung hinter- oder nacheinander anordenbar.

Des Weiteren kann die Nehmervorrichtung ein Kolbenelement umfassen, welches im Zusammenspiel mit dem ersten Gehäuseteil eine Druckkammer bildet, sodass das Kolbenelement in axialer Richtung verfahrbar ist. Genauer geschildert, kann das Kolbenelement bei Druckbeaufschlagung eines Fluids in der Zulauf- und/oder in der Druckkammer von einem eingefahrenen Zustand in einen ausgefahrenen Zustand überführt werden. Durch Absenken des Druckniveaus in der Zulauf- und/oder in der Druckkammer kann sich das Kolbenelement vom ausgefahrenen Zustand in den eingefahrenen Zustand zurückbewegen. Das Kolbenelement kann als Ringkolbenelement ausgebildet sein.

Auch kann das Kolbenelement eine innere und eine äußere Ringdichtung zum Anliegen gegen das Gehäuseelement bzw. gegen dessen ersten Gehäuseteil umfassen.

Ein zweiter Aspekt der vorliegenden Erfindung umfasst eine Antriebsanordnung für ein hybrides oder elektrisches Fahrzeug.

Es wird ausdrücklich darauf hingewiesen, dass die Merkmale der Nehmervorrichtung, wie sie unter dem ersten Aspekt erwähnt werden, einzeln oder miteinander kombinierbar bei der Antriebsanordnung Anwendung finden können.

Anders ausgedrückt, die oben unter dem ersten Aspekt der Erfindung genannten Merkmale betreffend die Nehmervorrichtung können auch hier unter dem zweiten Aspekt der Erfindung mit weiteren Merkmalen kombiniert werden.

So umfasst eine Antriebsanordnung für ein hybrides oder elektrisches Fahrzeug eine Nehmervorrichtung nach dem ersten Aspekt.

Zudem umfasst die Antriebsanordnung ein Gehäuse zum Aufnehmen der Nehmervorrichtung und zum Bilden einer Zulaufkammer im Zusammenspiel mit der Nehmervorrichtung, wobei das Gehäuseelement der Nehmervorrichtung an dem Gehäuse angeordnet ist. Genauer geschildert, kann das Gehäuse der Antriebsanordnung zusammen mit dem Gehäuseelement der Nehmervorrichtung die Zulaufkammer ausbilden.

Ferner kann das Gehäuse der Antriebsanordnung an das Gehäuseelement der Nehmervorrichtung dergestalt angepasst sein, dass die Aufnahme der Nehmervorrichtung und das Gehäuse der Antriebsanordnung hinsichtlich ihrer Form aufeinander abgestimmt sind.

Dabei kann der radiale Anschlag der Nehmervorrichtung einem gleichorientierten Abschnitt oder einem gleichorientierten Anschlagbereich des Gehäuses der Antriebsanordnung gegenüberliegen. So kann das Gehäuse der Antriebsanordnung einen Anschlagbereich bilden, welcher vom radialen Anschlag des Gehäuseelements der Nehmervorrichtung beabstandet ist und in seinen Abmessungen und in seiner Form an den radialen Anschlag der Nehmervorrichtung angepasst ist. Mit anderen Worten formuliert, können der Anschlagbereich und der radiale Anschlag geometrisch komplementär aufeinander abgestimmt sein.

Der Anschlagbereich und der radiale Anschlag weisen dabei eine Geometrie auf, die ein Übertragen von Kräften von dem radialen Anschlag auf den Anschlagbereich bestmöglich unterstützt. So können der Anschlagbereich und der radiale Anschlag jeweils eine Fläche zum gegenseiteigen Kontaktieren ausbilden, die zueinander gleichorientiert ausgerichtet oder parallel zueinander orientiert sind.

Der Abstand bzw. der Spalt in radialer Richtung zwischen Anschlagbereich und radialem Anschlag kann das Maß der Verformung sein, um welches sich der erste Gehäuseabschnitt des Gehäuseelements verformen darf, bevor sich der Anschlagbereich der Antriebsanordnung und der radiale Anschlag der Nehmervorrichtung kontaktieren.

Ferner kann die Antriebsanordnung eine Lagereinrichtung zum Lagern des Gehäuses auf einer Ein- oder Ausgangswelle umfassen.

Auch ist es möglich, dass die Antriebsanordnung eine Eingangswelle, welche Drehmomente einer Drehmaschine überträgt, aufweist. Dabei kann die Eingangswelle als Hohlwelle ausgebildet sein.

Zudem kann die Antriebsanordnung eine Ausgangswelle aufweisen, welche Drehmomente an ein Getriebe überträgt. Die Ausgangswelle kann als Vollwelle ausgebildet sein.

Des Weiteren kann die Antriebsanordnung eine Kupplungseinrichtung mit inneren und äußeren Lamellenelementen umfassen. Die Kupplungseinrichtung ist in der Lage, einen Drehmomentenfluss zwischen den inneren und äußeren Lamellenelementen zu unterbrechen oder herzustellen.

Die inneren Lamellenelemente können mit der Ausgangswelle und die äußeren Lamellenelemente mit der Eingangswelle verbunden sein. Somit kann ein Drehmoment von der Eingangswelle auf die Ausgangswelle übertragen werden.

Ferner kann die Antriebsanordnung ein Ausrücklager zum Aktiveren oder Deaktivieren der Kupplungseinrichtung umfassen, wodurch die Kupplungseinrichtung bzw. die gesamte Antriebsanordnung ein Drehmoment überträgt oder die Übertragung unterbricht.

Das Ausrücklager kann an dem Kolbenelement der Nehmervorrichtung anliegen. Somit ist das Ausrücklager unmittelbar von dem Kolbenelement betätigbar.

Zudem kann die Antriebsanordnung ein Zwischenelement zum Übertragen von Kräften des Ausrücklagers auf die Kupplungseinrichtung aufweisen. Dies erlaubt es die Kraft des Kolbenelements günstig in die Kupplungseinrichtung einzuführen.

Auch kann die Antriebsanordnung eine Tellerfeder zum Rückstellen des Ausrücklagers und somit des Kolbenelements der Nehmervorrichtung aufweisen.

Nachfolgend wird der oben dargestellte Erfindungsgedanke nochmals und ergänzend mit anderen Worten ausgedrückt.

Dieser Gedanke betrifft - vereinfacht dargestellt - den Umstand, dass nach Montage einer Nehmervorrichtung an ein Gehäuse einer Antriebsanordnung die Nehmervorrichtung und das Gehäuse einen Formschluss bilden, durch welchen die Verformung des Gehäuseelements der Nehmervorrichtung im Belastungsfall verhinderbar ist.

Nachstehend wird die Erfindung anhand eines Ausführungsbeispiels in Verbindung mit zugehörigen Zeichnungen näher erläutert. Hierbei zeigen schematisch:
- **Fig. 1**: eine Schnittansicht auf eine Nehmervorrichtung aus dem Stand der Technik mit einem Kolbenelement im eingefahrenen Zustand;
- **Fig. 2**: eine Schnittansicht auf eine Nehmervorrichtung aus dem Stand der Technik mit einem Kolbenelement im ausgefahrenen Zustand;
- **Fig. 3**: eine Schnittansicht auf eine Nehmervorrichtung an einem Gehäuse einer Antriebsanordnung;
- **Fig. 4**: eine Schnittansicht auf die Nehmervorrichtung aus Figur 3, ohne Gehäuse einer Antriebsanordnung; und
- **Fig. 5**: eine Schnittansicht auf eine Antriebsanordnung mit der Nehmervorrichtung aus Figur 3.

In der nachfolgenden Beschreibung werden gleiche Bezugszeichen für gleiche Gegenstände verwendet.

Betreffend die Figuren 1 und 2 wird auf die Ausführungen eingangs der Beschreibung verwiesen, sodass an dieser Stelle von weiteren Erläuterungen absehbar ist.

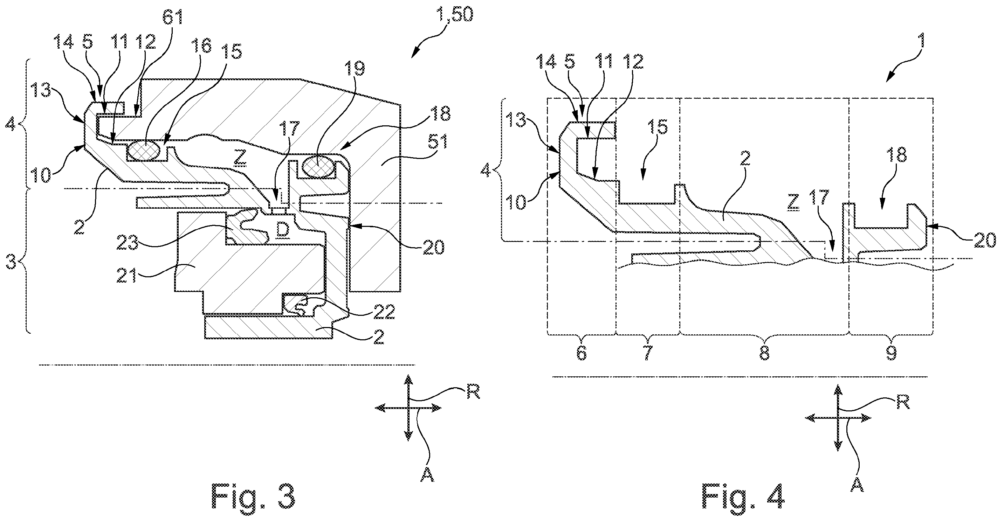

Figur 3 zeigt eine Schnittansicht auf eine Nehmervorrichtung 1 an einem Gehäuse 51 einer Antriebsanordnung 50, während Figur 4 eine Schnittansicht auf die Nehmervorrichtung 1 aus Figur 3 ohne Gehäuse 51 einer Antriebsanordnung 50 zeigt.

Der Einfachheit und Kürze halber werden die Figuren 3 und 4 nachfolgend gemeinsam beschrieben.

So zeigen die Figuren 3 und 4 eine Nehmervorrichtung 1, wie z. B. einen Zentralausrücker, für ein hybrides oder elektrisches Fahrzeug.

Die Nehmervorrichtung 1 hat dabei ein Gehäuseelement 2 mit einem ersten und einem zweiten Gehäuseteil 3, 4, die in radialer Richtung R zueinander versetzt angeordnet sind. Dabei ist der erste Gehäuseteil 3 im Vergleich zum zweiten 4 in radialer Richtung R weiter innen angeordnet. Das Gehäuseelement 2 ist einteilig und aus einem Kunststoff ausgebildet.

Der erste Gehäuseteil 3 bildet einen Teil einer Druckkammer D, wobei im Zusammenspiel von dem ersten Gehäuseteil 3 und einem Kolbenelement 21 der Nehmervorrichtung 1 eine vollständige Druckkammer D ausbildbar ist. Somit ist das Kolbenelement 21 in axialer Richtung A aufgrund eines druckbeaufschlagten Fluids relativ zum Gehäuseelement 2 verfahrbar.

Ferner bildet der zweite Gehäuseteil 4 einen Teil einer Zulaufkammer Z, wobei im Zusammenspiel von dem zweiten Gehäuseteil 4 und einem Gehäuse 51 einer Antriebsanordnung 50, als weiterer Teil der Zulaufkammer Z, eine vollständige Zulaufkammer Z ausbildbar ist. Die Zulaufkammer Z und die Druckkammer D stehen in Fluidkommunikation miteinander, sodass ein Druckauf- oder -abbau in der Zulaufkammer Z einen Druckauf- oder -abbau in der Druckkammer D bewirkt.

Der zweite Gehäuseteil 4 hat in axialer Richtung A einen ersten Gehäuseabschnitt 6, der ein erstes axiales Ende 10 der Nehmervorrichtung 1 bildet (vgl. Figur 4).

Des Weiteren bildet der erste Gehäuseabschnitt 6 eine Aufnahme 11 für ein Gehäuse 51 einer Antriebsanordnung 50. Dabei umgreift die Aufnahme 11 ein Gehäuse 51 einer Antriebsanordnung 50 derart, dass wenigstens ein Teilbereich der Aufnahme 11 bei einer radial nach innen gerichteten Verformung des Gehäuseelement 2 an einem Gehäuse 51 einer Antriebsanordnung 50 anschlägt, um die Verformung des zweiten Gehäuseteils 4 zu begrenzen.

Des Weiteren ist den Figuren 3 und 4 zu entnehmen, dass der erste Gehäuseabschnitt 6 bzw. der zweite Gehäuseteil 4 einen radialen Anschlag 5 aufweist, mit welchem eine in radialer Richtung R nach innen gerichtete Verformung des Gehäuseelements 2 ab einem bestimmten Verformungsmaß des zweiten Gehäuseteils 4 begrenzbar ist. Begrenzbar ist die Verformung allerdings tatsächlich erst dann, wenn die Nehmervorrichtung 1 an einem Gehäuse 51 einer Antriebsanordnung 50 angeordnet ist.

Der radiale Anschlag 5 ist Teil der Aufnahme 11 bzw. wird von der Aufnahme 11 gebildet. Mit anderen Worten ausgedrückt, entspricht der radiale Anschlag 5 dem wenigstens einen Teilbereich der Aufnahme 11. Hierbei ist die Aufnahme 11 geometrisch komplementär an ein Gehäuse 51 einer Antriebsanordnung 50 angepasst.

Ferner ist die Aufnahme 11 im axialen Querschnitt U-förmig ausgebildet, sodass ein Abschnitt oder ein Anschlagbereich 61 eines Gehäuses 51 einer Antriebsanordnung 50 aufnehmbar ist.

Die Aufnahme 11 hat einen ersten 12, einen zweiten 13 und einen dritten Schenkel 14, die miteinander verbunden sind, um einen U-förmigen Querschnitt zu bilden. Dabei sind der erste und dritte Schenkel 12, 14 gleichorientiert zueinander und in axialer Richtung A ausgerichtet. Der zweite Schenkel 13 verbindet den ersten 12 mit dem dritten 14, wobei der zweite Schenkel 13 in radialer Richtung R ausgerichtet ist.

Ferner ist mit Blick auf Figur 4 der dritte Schenkel 14 im Vergleich zum ersten 12 radial weiter außen ausgebildet, wobei der dritte Schenkel 14 der Aufnahme 11 den radialen Anschlag 5 bildet, der eine Verformung der Nehmervorrichtung 1 in radialer Richtung R nach innen begrenzt. Der zweite Schenkel 13 der Aufnahme 11 bildet einen axialen Anschlag.

Des Weiteren zeigen Figuren 3 und 4, dass der zweite Gehäuseteil 4 einen zweiten Gehäuseabschnitt 7 hat, wobei sich in axialer Richtung A der zweite Gehäuseabschnitt 7 an den ersten Gehäuseabschnitt 6 des zweiten Gehäuseteils 4 anschließt.

Ferner hat der zweite Gehäuseabschnitt 7 eine Aufnahme 15 für eine Dichtung 16, um eine Zulaufkammer Z in axialer A und radialer Richtung R zu dichten. Dabei ist die Aufnahme 15 als Nut ausgebildet.

Zudem zeigen Figuren 3 und 4, dass der zweite Gehäuseteil 4 einen dritten Gehäuseabschnitt 8 umfasst, wobei sich der dritte Gehäuseabschnitt 8 an den zweiten Gehäuseabschnitt 7 in axialer Richtung A anschließt.

Der dritte Gehäuseabschnitt 8 bildet im Zusammenspiel mit einem Gehäuse 51 einer Antriebsanordnung 50 eine Zulaufkammer Z, der von dem zweiten 7 und einem vierten Gehäuseabschnitt 9 des zweiten Gehäuseteils 4 begrenzt und gedichtet wird.

Ferner hat der dritte Gehäuseabschnitt 8 einen Ringspalt 17, welcher eine Fluidkommunikation zwischen einer Zulaufkammer Z und einer Druckkammer D herstellt.

Der Ringspalt 17 bildet einen Übergang von einer Druckkammer D in eine Zulaufkammer Z, sodass ein druckbeaufschlagtes Fluid aus der Zulaufkammer Z in die Druckkammer D zu- oder aus der Druckkammer D in die Zulaufkammer Z ablaufen kann, um ein Kolbenelement 21 der Nehmervorrichtung 1 zu verfahren.

Auch ist aus den Figuren 3 und 4 zu erkennen, dass der zweite Gehäuseteil 4 einen vierten Gehäuseabschnitt 9 umfasst, der sich an den dritten Gehäuseabschnitt 8 in axialer Richtung A anschließt.

Hierbei hat der vierte Gehäuseabschnitt 9 eine Aufnahme 18 für eine Dichtung 19, um eine Zulaufkammer Z in axialer A und radialer Richtung R zu dichten. Die Aufnahme 18 ist als Nut ausgebildet.

Der vierte Gehäuseabschnitt 9 bildet ein zweites axiales Ende 20 der Nehmervorrichtung 1.

Kurz zusammengefasst kann hinsichtlich der Gehäuseabschnitte 6, 7, 8, 9 des Gehäuseelements 2 festgehalten werden, dass der erste 6 und der zweite 7 und dritte 8 und der vierte Gehäuseabschnitt 9 in axialer Richtung A hinter- oder nacheinander angeordnet sind.

Wie bereits angedeutet, hat die Nehmervorrichtung 1 ein Kolbenelement 21, welches im Zusammenspiel mit dem ersten Gehäuseteil 3 die Druckkammer D bildet, sodass das Kolbenelement 21 in axialer Richtung A verfahrbar ist. Genauer geschildert, kann das Kolbenelement 21 bei Druckbeaufschlagung eines Fluids in der Zulauf- Z und in der Druckkammer D von einem eingefahrenen Zustand in einen ausgefahrenen Zustand überführt werden. Durch Absenken des Druckniveaus in der Zulauf- Z und in der Druckkammer D kann sich das Kolbenelement 21 vom ausgefahrenen Zustand in den eingefahrenen Zustand zurückbewegen.

Dabei ist das Kolbenelement 21 als Ringkolbenelement ausgebildet, wobei das Kolbenelement 21 eine innere 22 und eine äußere Ringdichtung 23 zum Anliegen gegen das Gehäuseelement 2 bzw. gegen dessen ersten Gehäuseteil 3 umfasst.

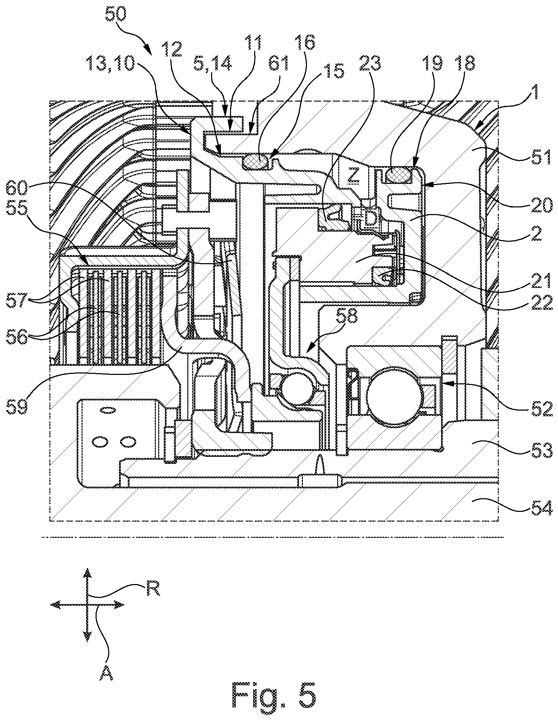

Figur 5 zeigt eine Schnittansicht auf eine Antriebsanordnung 50 mit der Nehmervorrichtung 1 aus Figuren 3 und 4.

Konkreter beschrieben hat die Antriebsanordnung 50 für ein hybrides oder elektrisches Fahrzeug die oben geschilderte Nehmervorrichtung 1 und ein Gehäuse 51 zum Aufnehmen der Nehmervorrichtung 1 und zum Bilden einer Zulaufkammer Z im Zusammenspiel mit der Nehmervorrichtung 1 bzw. mit deren zweitem Gehäuseteil 4. Dabei ist das Gehäuseelement 2 der Nehmervorrichtung 1 an dem Gehäuse 51 angeordnet.

Zudem ist gemäß Figur 5 das Gehäuse 51 der Antriebsanordnung 50 an das Gehäuseelement 2 der Nehmervorrichtung 1 dergestalt angepasst, dass die Aufnahme 11 der Nehmervorrichtung 1 und das Gehäuse 51 der Antriebsanordnung 50 hinsichtlich ihrer Form aufeinander abgestimmt sind. Dabei liegt der radiale Anschlag 5 der Nehmervorrichtung 1 einem gleichorientierten Anschlagbereich 61 des Gehäuses 51 der Antriebsanordnung 50 gegenüber.

Anders ausgedrückt, bildet das Gehäuse 51 der Antriebsanordnung 50 einen Anschlagbereich 61, welcher vom radialen Anschlag 5 des Gehäuseelements 2 beabstandet ist und in seinen Abmessungen und in seiner Form an den radialen Anschlag 5 angepasst ist. Mit anderen Worten formuliert, sind der Anschlagbereich 61 der Antriebsanordnung 50 und der radiale Anschlag 5 der Nehmervorrichtung 1 geometrisch komplementär aufeinander abgestimmt.

Der Anschlagbereich 61 und der radiale Anschlag 5 haben dabei eine Geometrie, die ein Übertragen von Kräften von dem radialen Anschlag 5 auf den Anschlagbereich 61 bestmöglich unterstützt. So weisen der Anschlagbereich 61 und der radiale Anschlag 5 jeweils eine Fläche zum gegenseitigen Kontaktieren auf, die zueinander gleichorientiert ausgerichtet bzw. parallel zueinander orientiert sind.

Der Abstand bzw. der Spalt in radialer Richtung R zwischen Anschlagbereich 61 und radialem Anschlag 5 ist das Maß der Verformung, um welches sich der erste Gehäuseabschnitt 6 des Gehäuseelements 2 bzw. das Gehäuseelement 2 verformen darf, bevor sich der Anschlagbereich 61 und der radiale Anschlag 5 kontaktieren.

Des Weiteren zeigt Figur 5, dass die Antriebsanordnung 50 eine Lagereinrichtung 52 zum Lagern des Gehäuses 51 auf einer Eingangswelle 53 sowie eine Eingangswelle 53 hat, welche Drehmomente einer Drehmaschine (nicht dargestellt) überträgt. Die Eingangswelle 53 ist als Hohlwelle ausgebildet.

Ferner hat gemäß Figur 5 die Antriebsanordnung 50 eine Ausgangswelle 54, welche Drehmomente an ein Getriebe überträgt, wobei die Ausgangswelle 54 als Vollwelle ausgebildet ist.

Des Weiteren ist aus Figur 5 zu erkennen, dass die Antriebsanordnung 50 eine Kupplungseinrichtung 55 mit inneren 56 und äußeren Lamellenelementen 57 umfasst, wobei die inneren Lamellenelemente 56 mit der Ausgangswelle 54 und die äußeren Lamellenelemente 57 mit der Eingangswelle 53 verbunden sind.

Auch hat die Antriebsanordnung 50 ein Ausrücklager 58 zum Aktiveren oder Deaktivieren der Kupplungseinrichtung 55, wodurch die Kupplungseinrichtung 55 ein Drehmoment überträgt oder die Übertragung unterbricht. Dabei liegt das Ausrücklager 58 an dem Kolbenelement 21 der Nehmervorrichtung 1 an. Somit ist das Ausrücklager 58 unmittelbar von dem Kolbenelement 21 betätigbar.

Zudem hat nach Figur 5 die Antriebsanordnung 50 ein Zwischenelement 59 zum Übertragen vom Kräften des Ausrücklagers 58 auf die Kupplungseinrichtung 55 und eine Tellerfeder 60 zum Rückstellen des Ausrücklagers 58 und somit des Kolbenelements 21 der Nehmervorrichtung 1.

Nachstehend werden die Figuren 3 bis 5 zusätzlich mit anderen Worten beschrieben.

Das CSC-Gehäuse bzw. das Gehäuseelement 2 der Nehmervorrichtung 1 sowie das Gehäuse 51 der Antriebsanordnung 50 werden optimiert. Und zwar dahingehend, dass nach der Montage der Nehmervorrichtung 1 ein Formschluss zwischen Nehmervorrichtung 1 und Gehäuse 51 der Antriebsanordnung 50 entsteht.

Dafür wird der Kragen bzw. der erste Gehäuseabschnitt 6 des Gehäuseelements 2 verlängert. Diese Optimierung ermöglicht, dass das CSC Gehäuse / das Gehäuseelement 2 in das Gehäuse 51 der Antriebsanordnung 50 eingreift (Formschluss) und sich selbst abstützt.

Damit das CSC Gehäuse / das Gehäuseelement 2 der Nehmervorrichtung 1 in das Gehäuse 51 der Antriebsanordnung 50 eingreifen kann, ist auch das Gehäuse 51 der Antriebsanordnung 50 angepasst, und zwar mit einer passenden Aussparung bzw. mit einem passenden Anschlagbereich 61. Somit kann sich das Gehäuseelement 2 der Nehmervorrichtung 1 bei erhöhten Belastungen nur noch zu einem gewissen Grad verformen.

**Bezugszeichenliste**

| | | | |
|---|---|---|---|
| 1 | Nehmervorrichtung | 22 | innere Ringdichtung |
| 2 | Gehäuseelement | 23 | äußere Ringdichtung |
| 3 | erster Gehäuseteil | | |
| 4 | zweiter Gehäuseteil | 50 | dezidiertes hybrides Getriebe |
| 5 | radialer Anschlag | 51 | Gehäuse |
| 6 | erster Gehäuseabschnitt | 52 | Lagereinrichtung |
| 7 | zweiter Gehäuseabschnitt | 53 | Eingangswelle |
| 8 | dritter Gehäuseabschnitt | 54 | Ausgangswelle |
| 9 | vierter Gehäuseabschnitt | 55 | Kupplungseinrichtung |
| 10 | erstes axiales Ende | 56 | innere Lamellenelementen |
| 11 | Aufnahme | 57 | äußere Lamellenelementen |
| 12 | erster Schenkel | 58 | Ausrücklager |
| 13 | zweiter Schenkel | 59 | Zwischenelement |
| 14 | dritter Schenkel | 60 | Tellerfeder |
| 15 | Aufnahme | 61 | Anschlagbereich |
| 16 | Dichtung | | |
| 17 | Ringspalt | D | Druckkammer |
| 18 | Aufnahme | Z | Zulaufkammer |
| 19 | Dichtung | | |
| 20 | zweites axiales Ende | A | axiale Richtung |
| 21 | Kolbenelement | R | radiale Richtung |

## Patentansprüche

1. Nehmervorrichtung (1) für ein hybrides oder elektrisches Fahrzeug aufweisend:
- ein Gehäuseelement (2) mit einem ersten und einem zweiten Gehäuseteil (3, 4), die in radialer Richtung (R) zueinander versetzt angeordnet sind,
- wobei der erste Gehäuseteil (3) einen Teil einer Druckkammer (D) bildet,
- wobei im Zusammenspiel von dem ersten Gehäuseteil (3) und einem Kolbenelement (21) der Nehmervorrichtung (1) eine vollständige Druckkammer (D) ausbildbar ist, sodass das Kolbenelement (21) in axialer Richtung (A) aufgrund eines druckbeaufschlagten Fluids relativ zum Gehäuseelement (2) verfahrbar ist,
- wobei der zweite Gehäuseteil (4) einen Teil einer Zulaufkammer (Z) bildet,
- wobei im Zusammenspiel von dem zweiten Gehäuseteil (4) und einem Gehäuse (51) einer Antriebsanordnung (50), als weiterer Teil der Zulaufkammer (Z), eine vollständige Zulaufkammer (Z) ausbildbar ist,
- wobei der zweite Gehäuseteil (4) in axialer Richtung (A) einen ersten Gehäuseabschnitt (6) umfasst, der ein erstes axiales Ende (10) der Nehmervorrichtung (1) bildet,
wobei
- der erste Gehäuseabschnitt (6) eine Aufnahme (11) für ein Gehäuse (51) einer Antriebsanordnung (50) bildet,
- wobei die Aufnahme (11) ein Gehäuse (51) einer Antriebsanordnung (50) derart umgreift, dass wenigstens ein Teilbereich der Aufnahme (11) bei einer radial nach innen gerichteten Verformung des Gehäuseelement (2) an einem Gehäuse (51) einer Antriebsanordnung (50) anschlägt, um die Verformung des zweiten Gehäuseteils (4) zu begrenzen,
- **dadurch gekennzeichnet, dass**
- die Aufnahme (11) einen ersten (12), einen zweiten (13) und einen dritten Schenkel (14) aufweist, die miteinander verbunden sind, um einen U-förmigen Querschnitt zu bilden,
- der erste und dritte Schenkel (12, 14) gleichorientiert zueinander ausgerichtet sind und der zweite Schenkel (13) den ersten (12) mit dem dritten (14) verbindet,
- der dritte Schenkel (14) der Aufnahme (11) den radialen Anschlag (5) bildet, der eine Verformung der Nehmervorrichtung (1) in radialer Richtung (R) nach innen begrenzt.

2. Nehmervorrichtung nach Anspruch 1,
- wobei der erste Gehäuseabschnitt (6) oder der zweite Gehäuseteil (4) einen radialen Anschlag (5) aufweist, mit welchem eine in radialer Richtung (R) nach innen gerichtete Verformung des Gehäuseelements (2) ab einem bestimmten Verformungsmaß des zweiten Gehäuseteils (4) begrenzbar ist,
- wobei der radiale Anschlag (5) Teil der Aufnahme (11) ist oder von der Aufnahme (11) gebildet wird.

3. Nehmervorrichtung nach Anspruch 1 oder 2,
- wobei die Aufnahme (11) kreisrund ausgebildet ist und im axialen Querschnitt eine Form ähnlich einer Dachrinne aufweist,
und/oder
- wobei die Aufnahme (11) im axialen Querschnitt U-förmig oder halbkreisförmig ausgebildet ist, sodass ein Abschnitt oder ein Anschlagbereich (61) eines Gehäuses (51) einer Antriebsanordnung (50) aufnehmbar ist.

4. Nehmervorrichtung nach Anspruch 1 oder 2,
- wobei der zweite Gehäuseteil (4) einen zweiten Gehäuseabschnitt (7) umfasst,
- wobei der zweite Gehäuseabschnitt (7) eine Aufnahme (15) für eine Dichtung (16) aufweist, um eine Zulaufkammer (Z) in axialer (A) und radialer Richtung (R) zu dichten.

5. Nehmervorrichtung nach einem der vorangehenden Ansprüche,
- wobei der zweite Gehäuseteil (4) einen dritten Gehäuseabschnitt (8) umfasst,
- wobei der dritte Gehäuseabschnitt (8) im Zusammenspiel mit einem Gehäuse (51) einer Antriebsanordnung (50) eine Zulaufkammer (Z) bildet,
- wobei der dritte Gehäuseabschnitt (8) einen Ringspalt (17) aufweist, welcher eine Fluidkommunikation zwischen einer Zulaufkammer (Z) und einer Druckkammer (D) herstellt,
- wobei der Ringspalt (17) einen Übergang von einer Druckkammer (D) in eine Zulaufkammer (Z) bildet, sodass ein druckbeaufschlagtes Fluid aus der Zulaufkammer (Z) in die Druckkammer (D) zu- oder aus der Druckkammer (D) in die Zulaufkammer (Z) ablaufen kann, um ein Kolbenelement (21) der Nehmervorrichtung (1) zu verfahren.

6. Nehmervorrichtung nach einem der vorangehenden Ansprüche,
- wobei der zweite Gehäuseteil (4) einen vierten Gehäuseabschnitt (9) umfasst,
- wobei der vierte Gehäuseabschnitt (9) eine Aufnahme (18) für eine Dichtung (19) aufweist, um eine Zulaufkammer (Z) in axialer (A) und radialer Richtung (R) zu dichten,
- wobei der vierte Gehäuseabschnitt (9) ein zweites axiales Ende (20) der Nehmervorrichtung (1) bildet.

7. Nehmervorrichtung nach einem der vorangehenden Ansprüche,
- wobei die Nehmervorrichtung (1) ein Kolbenelement (21) umfasst, welches im Zusammenspiel mit dem ersten Gehäuseteil (3) die Druckkammer (D) bildet, sodass das Kolbenelement (21) in axialer Richtung (A) verfahrbar ist.

8. Antriebsanordnung (50) für ein hybrides oder elektrisches Fahrzeug aufweisend:
- eine Nehmervorrichtung (1) nach einem der vorangehenden Ansprüche,
- ein Gehäuse (51) zum Aufnehmen der Nehmervorrichtung (1) und zum Bilden einer Zulaufkammer (Z) im Zusammenspiel mit der Nehmervorrichtung (1),
- wobei das Gehäuseelement (2) der Nehmervorrichtung (1) an dem Gehäuse (51) angeordnet ist.

9. Antriebsanordnung nach Anspruch 8,
- wobei das Gehäuse (51) der Antriebsanordnung (50) an das Gehäuseelement (2) der Nehmervorrichtung (1) dergestalt angepasst ist, dass die Aufnahme (11) der Nehmervorrichtung (1) und das Gehäuse (51) der Antriebsanordnung (50) hinsichtlich ihrer Form aufeinander abgestimmt sind,
und/oder
- wobei das Gehäuse (51) der Antriebsanordnung (50) einen Anschlagbereich (61) bildet, welcher vom radialen Anschlag (5) des Gehäuseelements (2) der Nehmervorrichtung (1) beabstandet ist und in seinen Abmessungen und in seiner Form an den radialen Anschlag (5) der Nehmervorrichtung (1) angepasst ist.

## Claims

1. A slave device (1) for a hybrid or electric vehicle having:
- a housing element (2) with a first and a second housing part (3, 4) that are arranged offset from each other in a radial direction (R),
- wherein the first housing part (3) forms part of a pressure chamber (D),
- wherein a complete pressure chamber (D) can be formed by the combination of the first housing part (3) and a piston element (21) of the slave device (1), so that the piston element (21) can be moved in axial direction (A) relative to the housing element (2) due to a pressurised fluid,
- wherein the second housing part (4) forms part of a feed chamber (Z),
- wherein a complete feed chamber (Z) can be formed by the combination of the second housing part (4) and a housing (51) of a drive assembly (50), as a further part of the feed chamber (Z),
- wherein the second housing part (4) comprises in the axial direction (A) a first housing section (6), which forms a first axial end (10) of the slave device (1),
wherein
- the first housing portion (6) forms a receptacle (11) for a housing (51) of a drive assembly (50),
- wherein the receptacle (11) engages around a housing (51) of a drive assembly (50) such that, in the event of a radially inwardly directed deformation of the housing element (2), at least a section of the receptacle (11) abuts a housing (51) of a drive assembly (50) in order to limit the deformation of the second housing part (4),
- **characterised in that**
- the receptacle (11) has a first (12), a second (13) and a third limb (14), which are connected to each other to form a U-shaped cross section,
- the first and third limbs (12, 14) are aligned in the same direction to each other and the second limb (13) connects the first (12) with the third (14),
- the third limb (14) of the receptacle (11) forms the radial stop (5), which inwardly limits deformation of the slave device (1) in the radial direction (R).

2. The slave device according to claim 1,
- wherein the first housing portion (6) or the second housing part (4) has a radial stop (5) with which a deformation of the housing element (2) directed inwardly in the radial direction (R) can be limited from a certain degree of deformation of the second housing part (4),
- wherein the radial stop (5) is part of the receptacle (11) or is formed by the receptacle (11).

3. The slave device according to claim 1 or 2,
- wherein the receptacle (11) is circular and has a shape similar to a gutter in its axial cross section,
and/or
- wherein the receptacle (11) is U-shaped or semicircular in its axial cross section, so that a portion or a stop area (61) of a housing (51) of a drive assembly (50) can be received.

4. The slave device according to claim 1 or 2,
- wherein the second housing part (4) comprises a second housing portion (7),
- wherein the second housing portion (7) has a receptacle (15) for a seal (16) to seal a feed chamber (Z) in the axial (A) and radial (R) direction.

5. The slave device according to any one of the preceding claims,
- wherein the second housing part (4) comprises a third housing portion (8),
- wherein, in combination with a housing (51) of a drive assembly (50), the third housing portion (8) forms a feed chamber (Z),
- wherein the third housing portion (8) has an annular gap (17) that establishes fluid communication between a feed chamber (Z) and a pressure chamber (D),
- wherein the annular gap (17) forms a transition from a pressure chamber (D) to a feed chamber (Z), so that a pressurised fluid can flow from the feed chamber (Z) into the pressure chamber (D) or from the pressure chamber (D) into the feed chamber (Z) in order to move a piston element (21) of the slave device (1).

6. The slave device according to any one of the preceding claims,
- wherein the second housing part (4) comprises a fourth housing portion (9),
- wherein the fourth housing portion (9) has a receptacle (18) for a seal (19) to seal a feed chamber (Z) in the axial (A) and radial (R) direction,
- wherein the fourth housing portion (9) forms a second axial end (20) of the slave device (1).

7. The slave device according to any one of the preceding claims,
- wherein the slave device (1) comprises a piston element (21), which, in combination with the first housing part (3), forms the pressure chamber (D) so that the piston element (21) can be moved in the axial direction (A).

8. A drive assembly (50) for a hybrid or electric vehicle having:
- a slave device (1) according to any one of the preceding claims,
- a housing (51) for receiving the slave device (1) and for forming a feed chamber (Z) in combination with the slave device (1),
- wherein the housing element (2) of the slave device (1) is arranged on the housing (51).

9. The drive assembly according to claim 8,
- wherein the housing (51) of the drive assembly (50) is adapted to the housing element (2) of the slave device (1) such that the receptacle (11) of the slave device (1) and the housing (51) of the drive assembly (50) are matched to each other with respect to their shape,
and/or
- wherein the housing (51) of the drive assembly (50) forms a stop area (61) that is spaced apart from the radial stop (5) of the housing element (2) of the slave device (1) and is adapted in its dimensions and its shape to the radial stop (5) of the slave device (1).

## Revendications

1. Dispositif asservi (1) pour un véhicule hybride ou électrique présentant :
- un élément boîtier (2) comportant une première et une seconde partie de boîtier (3, 4) qui sont agencées décalées l'une par rapport à l'autre dans une direction radiale (R),
- dans lequel la première partie de boîtier (3) forme une partie d'une chambre de pression (D),
- dans lequel, en interaction entre la première partie de boîtier (3) et un élément piston (21) du dispositif asservi (1), une chambre de pression (D) complète peut être formée, de sorte que l'élément piston (21) peut être déplacé dans la direction axiale (A) en raison d'un fluide sous pression par rapport à l'élément boîtier (2),
- dans lequel la seconde partie de boîtier (4) forme une partie d'une chambre d'admission (Z),
- dans lequel, en interaction entre la seconde partie de boîtier (4) et un boîtier (51) d'un agencement d'entraînement (50), comme partie supplémentaire de la chambre d'admission (Z), une chambre d'admission (Z) complète peut être formée,
- dans lequel la seconde partie de boîtier (4) comprend, dans la direction axiale (A), une première section de boîtier (6) qui forme une première extrémité axiale (10) du dispositif asservi (1),
dans lequel
- la première section de boîtier (6) forme un réceptacle (11) pour un boîtier (51) d'un agencement d'entraînement (50),
- dans lequel le réceptacle (11) englobe un boîtier (51) d'un agencement d'entraînement (50) de sorte qu'au moins une zone partielle du réceptacle (11) bute contre un boîtier (51) d'un agencement d'entraînement (50) en cas de déformation radiale dirigée vers l'intérieur de l'élément boîtier (2) afin de limiter la déformation de la seconde partie de boîtier (4),
- **caractérisé en ce que**
- le réceptacle (11) présente une première (12), une deuxième (13) et une troisième branche (14) qui sont reliées entre elles pour former une section transversale en forme de U,
- les première et troisième branches (12, 14) sont alignées dans la même direction l'une par rapport à l'autre et la troisième branche (13) relie la première (12) à la troisième (14),
- la troisième branche (14) du réceptacle (11) forme la butée radiale (5) qui limite la déformation du dispositif asservi (1) dans la direction radiale (R) vers l'intérieur.

2. Dispositif asservi selon la revendication 1,
- dans lequel la première section de boîtier (6) ou la seconde partie de boîtier (4) présente une butée radiale (5) avec laquelle une déformation de l'élément boîtier (2) dirigée vers l'intérieur dans la direction radiale (R) peut être limitée à partir d'un certain degré de déformation de la seconde partie de boîtier (4),
- dans lequel la butée radiale (5) forme une partie du réceptacle (11) ou est formée par le réceptacle (11).

3. Dispositif asservi selon la revendication 1 ou 2,
- dans lequel le réceptacle (11) est réalisé circulaire et présente une forme similaire à une gouttière en section transversale axiale,
et/ou
- dans lequel le réceptacle (11) est réalisé en forme de U ou semi-circulaire en section transversale axiale, de sorte qu'une section ou une zone de butée (61) d'un boîtier (51) d'un agencement d'entraînement (50) puisse être reçue.

4. Dispositif asservi selon la revendication 1 ou 2,
- dans lequel la seconde partie de boîtier (4) comprend une deuxième section de boîtier (7),
- dans lequel la deuxième section de boîtier (7) présente un réceptacle (15) pour un joint (16) afin de sceller une chambre d'admission (Z) dans les directions axiale (A) et radiale (R).

5. Dispositif asservi selon l'une quelconque des revendications précédentes,
- dans lequel la seconde partie de boîtier (4) comprend une troisième section de boîtier (8),
- dans lequel la troisième section de boîtier (8), en interaction avec un boîtier (51) d'un agencement d'entraînement (50), forme une chambre d'admission (Z),
- dans lequel la troisième section de boîtier (8) présente un espace annulaire (17) qui établit une communication fluidique entre une chambre d'admission (Z) et une chambre de pression (D),
- dans lequel l'espace annulaire (17) forme une transition d'une chambre de pression (D) à une chambre d'admission (Z), de sorte qu'un fluide sous pression puisse s'écouler de la chambre d'admission (Z) vers la chambre de pression (D) ou de la chambre de pression (D) vers la chambre d'admission (Z) afin de déplacer un élément piston (21) du dispositif asservi (1).

6. Dispositif asservi selon l'une quelconque des revendications précédentes,
- dans lequel la seconde partie de boîtier (4) comprend une quatrième section de boîtier (9),
- dans lequel la quatrième section de boîtier (9) présente un réceptacle (18) pour un joint (19) afin de sceller une chambre d'admission (Z) dans les directions axiale (A) et radiale (R),
- dans lequel la quatrième section de boîtier (9) forme une seconde extrémité axiale (20) du dispositif asservi (1).

7. Dispositif asservi selon l'une quelconque des revendications précédentes,
- dans lequel le dispositif asservi (1) comprend un élément piston (21) qui, en interaction avec la première partie de boîtier (3), forme la chambre de pression (D) de sorte que l'élément piston (21) puisse être déplacé dans la direction axiale (A).

8. Agencement d'entraînement (50) pour un véhicule hybride ou électrique présentant :
- un dispositif asservi (1) selon l'une quelconque des revendications précédentes,
- un boîtier (51) destiné à recevoir le dispositif asservi (1) et à former une chambre d'admission (Z) en interaction avec le dispositif asservi (1),
- dans lequel l'élément boîtier (2) du dispositif asservi (1) est agencé sur le boîtier (51).

9. Agencement d'entraînement selon la revendication 8,
- dans lequel le boîtier (51) de l'agencement d'entraînement (50) est ajusté à l'élément boîtier (2) du dispositif asservi (1) de sorte que le réceptacle (11) du dispositif asservi (1) et le boîtier (51) de l'agencement d'entraînement (50) soient adaptés l'un à l'autre quant à leur forme,
et/ou
- dans lequel le boîtier (51) de l'agencement d'entraînement (50) forme une zone de butée (61) qui est espacée de la butée radiale (5) de l'élément boîtier (2) du dispositif asservi (1) et est adaptée dans ses dimensions et dans sa forme à la butée radiale (5) du dispositif asservi (1).
